Europäisches Patentamt

European Patent Office

Office européen des brevets

(11) Publication number: **0 214 567**
**A2**

## EUROPEAN PATENT APPLICATION

(21) Application number: 86111956.8

(22) Date of filing: 29.08.86

(51) Int. Cl.⁴ **G11B 5/00** , **G11B 5/09**

(30) Priority: **13.09.85 US 775850**

(43) Date of publication of application:
**18.03.87 Bulletin 87/12**

(84) Designated Contracting States:
**AT BE CH DE FR GB IT LI NL SE**

(71) Applicant: **International Business Machines Corporation**
**Old Orchard Road**
**Armonk, N.Y. 10504(US)**

(72) Inventor: **Voegeli, Otto**
**13465 Sycamore Avenue**
**Morgan Hill California 95037(US)**

(74) Representative: **Atchley, Martin John Waldegrave**
**IBM United Kingdom Limited Intellectual Property Department Hursley Park Winchester Hampshire SO21 2JN(GB)**

(54) **Apparatus and method for vertical magnetic recording in a magnetisable recording medium.**

(57) The present invention relates to apparatus for vertical magnetic recording in a magnetisable recording medium of the type comprising a magnetic transducer (14) having means (12) for generating a magnetic field and a recording gap, means for positioning the magnetic transducer so that the recording gap is in close proximity to a magnetisable recording medium, means for producing relative motion between the magnetic transducer and a recording medium, and means (10) for repeatedly energising the magnetic field generating means so as to generate a magnetic field repeatedly and produce a series of magnetic transitions in the portions of a recording medium which are positioned successively adjacent to the gap.

Apparatus according to the invention is characterised in that the means for energising the magnetic field generating means provides unidirectional energising pulses of relatively short duration so that the magnetic field is a bipolar magnetic field and the magnetic transitions are also bipolar, resulting in RZ ("return to zero") recording in the recording medium.

The invention also relates to a method of vertical magnetic recording in a magnetisable recording medium which results in RZ recording in the recording medium.

FIG. 1

# APPARATUS AND METHOD FOR VERTICAL MAGNETIC RECORDING IN A MAGNETISABLE RECORDING MEDIUM

The present invention relates to apparatus and a method for vertical recording in a magnetisable recording medium.

Present efforts in vertical digital magnetic recording are based on the non-return-to-zero (NRZ) recording method. In this mode, the magnetisable medium is saturated between magnetic transitions under the action of the unidirectional write field from the trailing edge of the recording head. When this field is reversed, a transition is written. The NRZ mode is ideally suited and hence is in general use for horizontal digital recording. However, the NRZ mode of recording is not as suitable for vertical digital magnetic recording since this mode cannot fully utilise the performance potential of the vertical recording system either in terms of output signal or with respect to recording density.

The object of the present invention is to provide an improved apparatus and method for vertical recording in a magnetisable recording medium.

The present invention relates to apparatus for vertical magnetic recording in a magnetisable recording medium of the type comprising a magnetic transducer having means for generating a magnetic field and a recording gap, means for positioning the magnetic transducer so that the recording gap is in close proximity to a magnetisable recording medium, means for producing relative motion between the magnetic transducer and a recording medium, and means for repeatedly energising the magnetic field generating means so as to generate a magnetic field repeatedly and produce a series of magnetic transitions in the portions of a recording medium which are positioned successively adjacent to the gap.

Apparatus according to the invention is characterised in that the means for energising the magnetic field generating means provides unidirectional energising pulses of relatively short duration so that the magnetic field is a bipolar magnetic field and the magnetic transitions are also bipolar, resulting in RZ ("return to zero") recording in the recording medium.

The invention also relates to a method of vertical magnetic recording in a magnetisable recording medium which results in RZ recording in the recording medium.

In order that the invention may be more readily understood an embodiment will now be described with reference to the accompanying drawings in which:

Figure 1 is a schematic block diagram of apparatus in accordance with the present invention and including a magnetic read/write head;

Figure 2 is a view in section of a specific embodiment of the magnetic read/write head of Figure 1, together with a magnetisable recording medium;

Figure 3 represents two plots of energising current supplied to a magnetic read/write head versus time, Figure 3a representing the situation with apparatus according to the present invention and Figure 3b representing the situation for a magnetic read/write head operated in the prior art NRZ mode;

Figure 4 is a diagram showing the preferred embodiment of a magnetisable recording medium to be used with apparatus and a method according to the present invention;

Figure 5 is a diagram showing the magnetic field configuration generated in response to an energising current pulse as illustrated in Figure 3a;

Figure 6 is a diagram showing the recorded magnetic transition produced in the recording medium as a result of the magnetic field configuration illustrated in Figure 5;

Figure 7 is a table showing a comparison of energising current, generated magnetic field, magnetic response and magnetic transition when recording in three different modes, the NRZ mode for both horizontal and vertical recording in accordance with the prior art, and an RZ vertical recording in accordance with the invention;

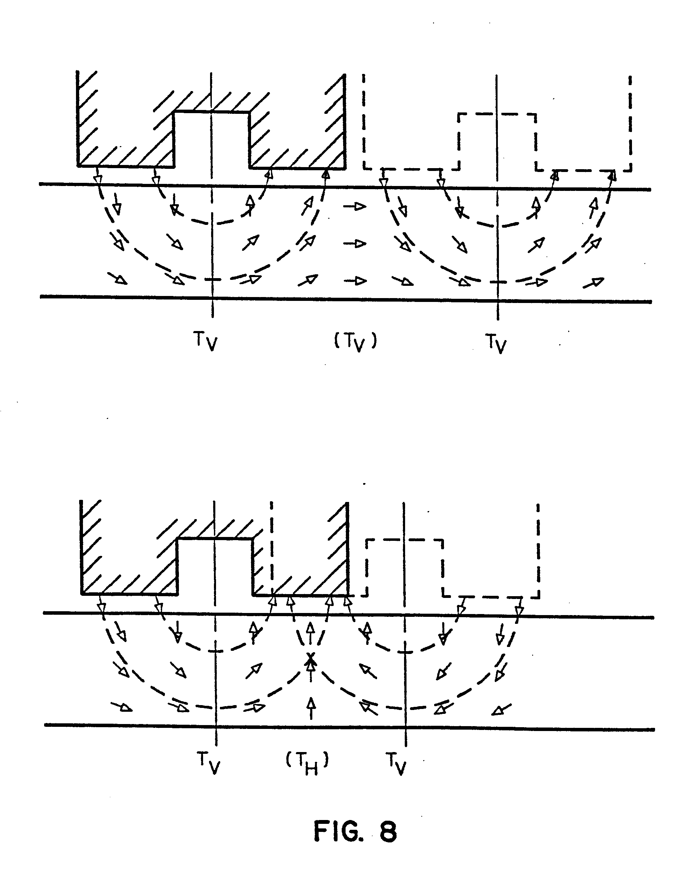

Figure 8 is a sketch showing the magnetisation configuration about two adjacent transitions generated by (a) energising current pulses of single polarity and (b) energising current pulses of alternating polarity;

Figure 9 is a sketch showing two sequences of RZ recording events, (a) in the alternating polarity mode and (b) in the single polarity mode; and

Figure 10 is a graph showing recording densities in the RZ vertical recording alternating mode for different read/write head geometries and lengths of write pulse (T).

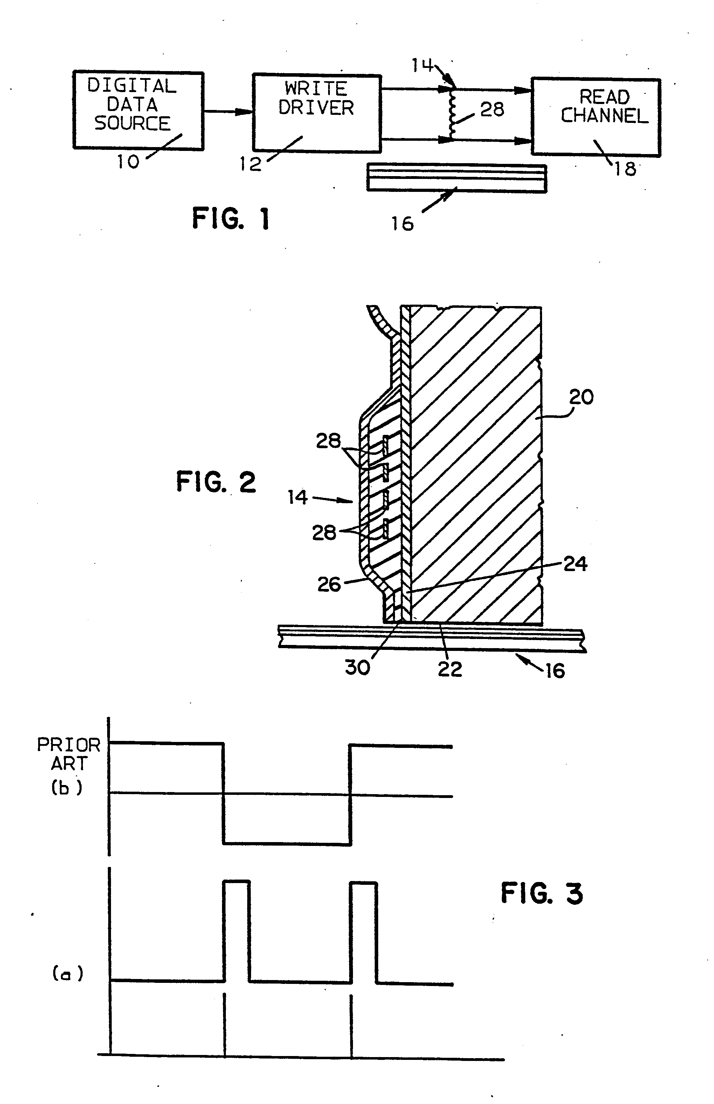

With reference to Figure 1, illustrating a preferred embodiment of the apparatus for carrying out the invention, a digital data source 10 supplies digital data signals suitable for "return to zero" - (RZ) vertical recording to write driver 12. The write driver 12 generates a pulse of write current representing the data signals, and this write current is coupled so as to energise a magnetic read/write head 14 (transducer) to produce RZ vertically recorded transitions in a magnetisable recording medium 16 suitable for RZ vertical recording. The magnetic read/write head or transducer 14 is also used to read previously RZ vertically recorded data from the magnetisable recording medium 16, and the output data signals are coupled to read channel 18 in which the output data signals are amplified and processed to identify the RZ vertically recorded digital data which was previously recorded.

Any magnetic read/write head and magnetisable recording medium suitable for RZ vertical recording can be used. A specific embodiment of the RZ vertical recording magnetic read/write head 14 and the RZ vertical magnetisable recording medium 16 is shown in Figure 2. The magnetic head 14 shown in Figure 2 is a thin film magnetic head which is formed on a nonmagnetisable ceramic substrate 20, as is known in the art. After deposition of the thin film structure, the substrate is shaped so as to provide an air bearing surface 22, which may be cylindrical, tapered, taper-flat, or of some other geometry. The thin film structure includes magnetisable pole pieces 24 and 26 and a winding 28 having at least one turn. Pole pieces 24 and 26 are separated by a small distance at the air bearing surface 22 to produce a transducing gap 30. When winding 28 is energised with a suitable write current pulse, a recording magnetic field is produced at transducing gap 30.

The magnetisable recording medium 16 shown in Figure 2 comprises a nonmagnetisable substrate 32 and a soft magnetisable underlayer 34 deposited on the substrate 32 below a magnetisable recording layer 36. The recording medium 16 preferably has a smaller coercivity, and hence smaller vertical remanence, than is typically used in conventional vertical recording.

Typical ranges are given in Table 1 for the saturation magnetisation, $4\pi M_s$, vertical remanence, $M_r/M_s$ and vertical coercivity $H_c$ for vertical recording media for reported usage in the NRZ mode and the workable parameters for the RZ vertical recording of the present invention.

TABLE I

Typical Medium Characteristics

Vertical Recording Media

|  | NRZ | RZ |  |
| --- | --- | --- | --- |
| $4\pi M_s$ | 2000–6000 | 4000–10000 | Gauss |
| $M_r/M_s$ | 30–80 | 2–20 | % |
| $H_c$ | 600–1200 | 200–800 | Oe |

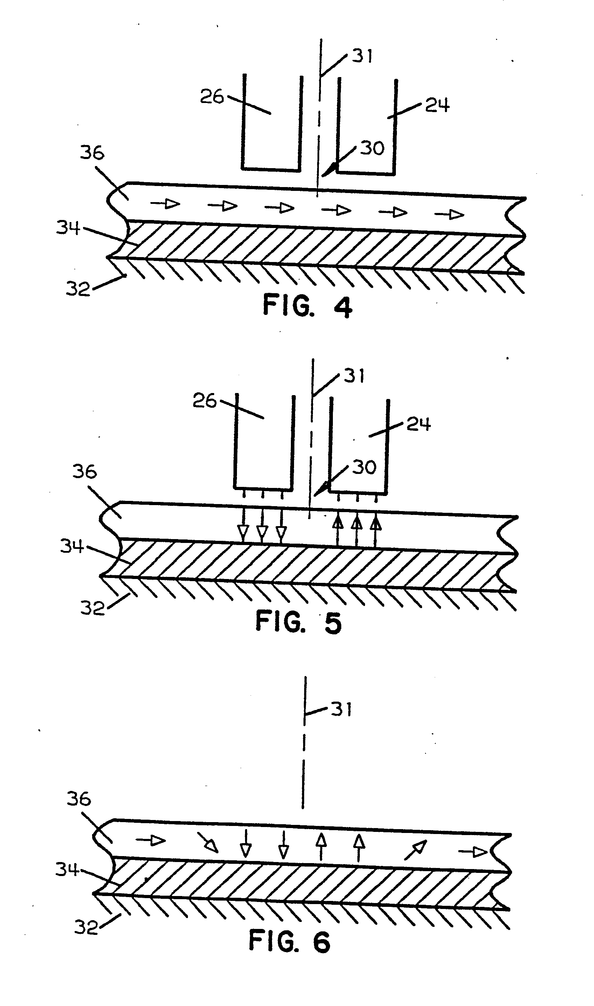

The magnetisable recording medium suitable for RZ vertical recording in accordance with the invention is further shown in Figure 4. The medium comprises the nonmagnetisable substrate 32, the high permeability underlayer 34 and the low coercivity RZ recording layer 36. The medium is DC erased prior to recording to produce the magnetisation configuration shown by the arrows in Figure 4. When the RZ vertical recording magnetic read/write head 14 is energised with a unidirectional current pulse (see Figure 3a) a magnetic field configuration is produced as shown in Figure 5. This bipolar write field extends substantially perpendicular to the surface of the recording medium and is centred about the transducing gap 30 of the recording head 14 as shown by the centreline of symmetry 31. The resulting recorded magnetic transition is also centred about the gap 30 as shown in Figure 6.

The recording method according to the invention utilises vertical recording in the RZ mode. To produce recording in the RZ vertical recording mode it is necessary to use a short pulse of energising write current instead of polarity reversals, as used in the prior art "non return to zero" NRZ recording mode. This prior art mode is illustrated in Figure 3b in which the NRZ write current is ON at some selected level I all the time. In order to write a transition, the polarity of the write current is reversed. As shown in Figure 3b at time t = t0 the write current is at +l, and at time t=t1, the polarity of the write current is switched to -l to write a first transition. At t=t2, the polarity of the write current is again switched to +l to write a second transition.

In contrast to this operation, Figure 3a illustrates the energising write current for the RZ vertical recording mode according to the invention. The write current is zero at time t=t0, and remains at zero until time t=t1. At this time a short pulse of write current with pulse length T and amplitude l is produced to record a first transition. The write current then returns to zero until a second short pulse of write current, with pulse length T, is produced at time t=t2 to produce a second transition. The write current for the RZ vertical recording mode is a short pulse of current, and the magnetic field and transition generation takes place symmetrically about the gap region of the head. The associated magnetic write field has bipolar symmetry and has a spatial extent directly governed by the pole piece geometry. In this context, bipolar describes a magnetic field or magnetic flux, centred about the transducing gap, and having on one side an excursion in the upward direction and on the other side a substantially equal excursion in the downward direction with respect to the plane of the recording medium. The data represented by the magnetic transitions recorded in the recording medium 16 in response to the short pulses of current have a symmetric bipolar magnetisation configuration, and have their size limited by internal demagnetising fields.

The RZ vertical recording system according to the invention has the advantages not only of lower write current but also of increased linear storage density. The resulting output signal is improved in both amplitude and wave form. In addition, since the vertical magnetisation vanishes between data bits in the RZ vertical recording method according to the invention, a variety of options are available for data encoding.

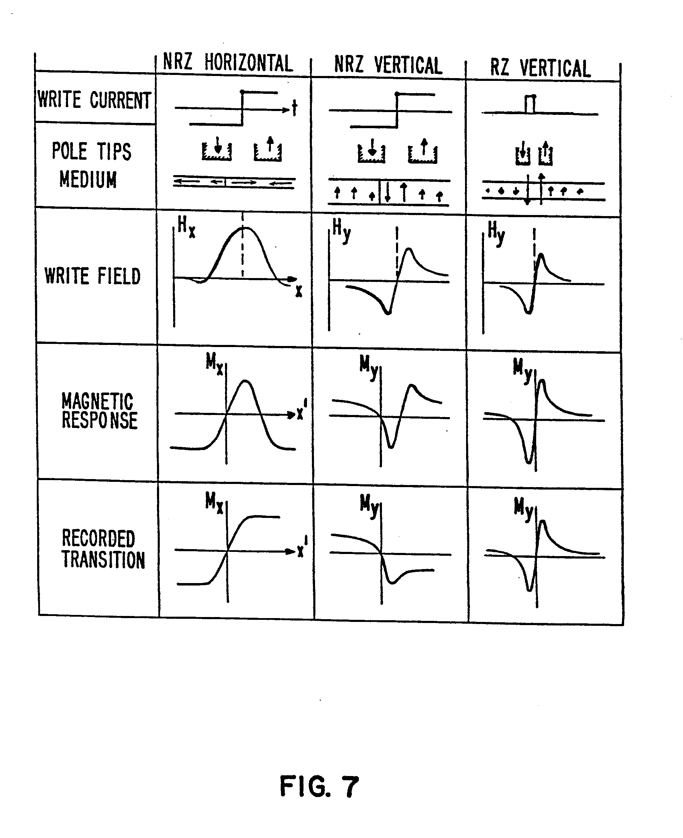

To contrast the operation of the RZ vertical recording according to the present invention, Figure 7 provides a comparative overview of NRZ and RZ recording principles when used with horizontal and vertical recording modes. For each of these modes, the table shows the write current and relative head/medium positions for writing (recording) an isolated transition, the write magnetic field profile with the portion generating the transition accentuated, the response of the magnetisation at time t=t0, and the remanent magnetisation after the head has passed.

Of the three recording methods shown in Figure 7, NRZ horizontal and NRZ vertical are the conventional methods, and the RZ vertical method is the method of the present invention. The RZ horizontal method is not viable since there exists no demagnetising effect to quench the remanent magnetisation away from the transition.

For the RZ vertical recording method, it can be seen that a transition is produced which not only is symmetrical but also is sharper. The transition is sharper because the write field gradients below the gap are substantially larger than that gradient below the trailing edge of the read/write head which is used with NRZ recording.

It has been shown that a short pulse of write current in the vertical recording mode produces advantageous operation when considering isolated data bits. Since the vertical magnetisation vanishes between magnetic transitions representing the data bits in the RZ vertical recording method, some options are available for data encoding. Since it is desired to select an encoding option which produces the greatest recording density, these options will be considered.

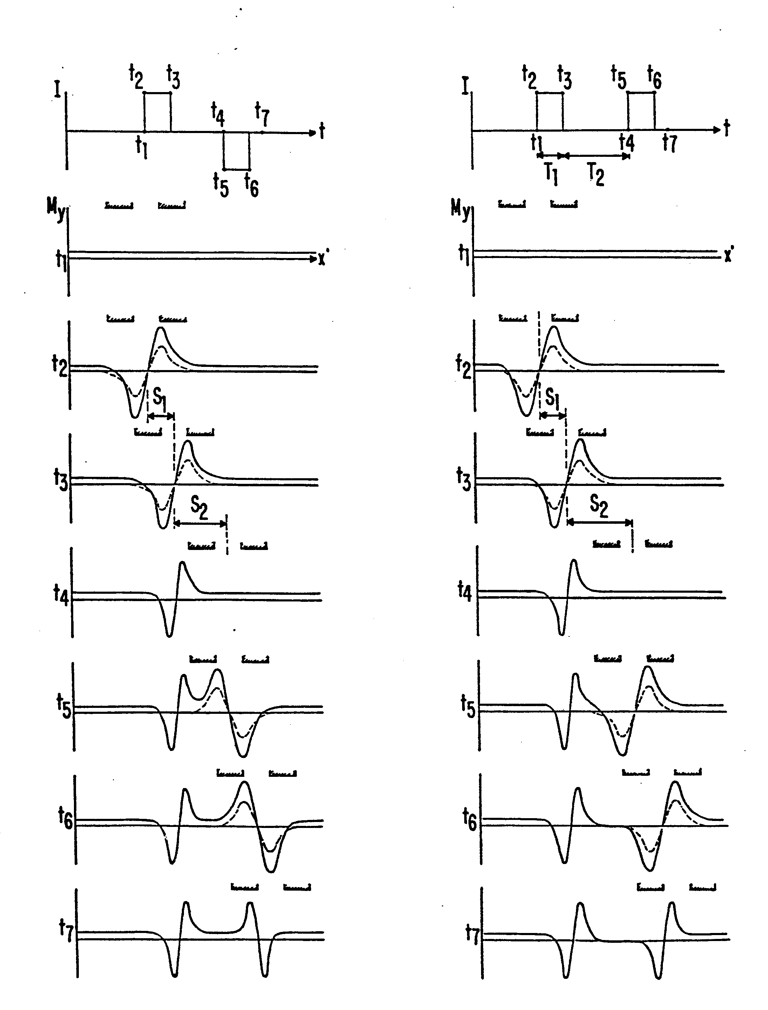

There are three options for data encoding. A first option is with single polarity write pulses, in which data is encoded by the presence or absence of a pulse. A second option is with alternating polarity write pulses, in which data is encoded by having a positive or negative pulse. A third option allows for data encoding using ternary, bipolar write pulses, in which data is encoded by having either no pulse, a positive pulse, or a negative pulse. The first two of these options are examined with the aid of Figure 9, which analyses a write sequence consisting of two pulses of alternating polarity (a) and of single polarity (b). Pulse width is $T_1$. The spacing between pulses is $T_2$. Time instances of interest are labelled $t_1$ through $t_7$. For each of these instances, the Figure shows the corresponding head position, the write field profile (dashed line curve), and the response of the magnetisation (continuous line curve). It is assumed that the recording medium has previously been DC erased, leaving the small uniform remanent magnetisation evident at "$t_1$". In the encoding method shown in Figure 9, information is defined by the presence (1) or absence (0) of a pulse, but other encoding methods could be used. At $t_2$, the first write pulse is applied, producing the depicted magnetic transition. While the pulse is occurring, this transition remains stationary relative to the write field, propagating along the recording medium at velocity v. At $t_3$, which marks the trailing edge of the pulse, the transition freezes in the medium, while, because of the demagnetising fields, there occurs some slimming of the transition profile. The location of its formation has now moved a distance $S_1 = vxT_1$, from the recording head.

The second write pulse occurs at $t_3$. Between $t_3$ and $t_4$ the bit moved a distance $S_2 = vxT_2$. It is necessary to find the minimum pulse spacing, $T_2$, such that the write field of the second pulse does not affect the previously recorded bit. This minimum separation must depend on the spatial extent of the write field. For the sake of a simple argument, it is assumed that the effective write field extends just to the outer edge of the pole pieces and that the shoulders of a written magnetisation profile have the same spatial extent. Then, at $t_5$, the leading edge of the second write pulse, the head needs to be separated from the recorded bit at least by a distance $S_2$: for single polarity $S_2 = (2p + g)$; for alternating polarity $S_2 = (p + g)$; where g and p are the length of the gap and the pole pieces, respectively. This minimum separation defines $T_2 = S_2/v$, the minimum spacing between write pulses. By $t_4$, the second transition freezes in the medium. The final illustration, at $t_7$, shows both transitions recorded and moving with the medium.

From above, the minimum separation between adjacent data bits is:

$$S = vT + (2p + g), \text{ for the single polarity sequence,}$$

and

$$S = vT + (1p + g), \text{ for the alternating polarity sequence.}$$

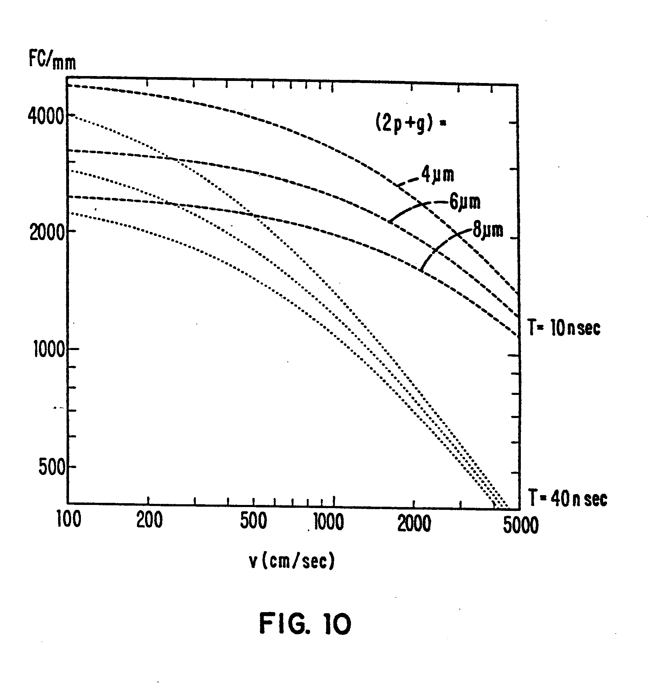

In the RZ mode, the attainable recording density is limited by head geometry, medium velocity and duration of the write pulse, as shown in Figure 10. This figure shows reciprocal bit spacing as a function of medium velocity for three different head geometries and three different pulse lengths. From Figure 10 it can be seen that the attainable density is predominantly limited, at lower head/medium velocities, by head geometry and, at higher head/medium velocities, by the length of the write pulses.

In suitable systems, vertical recording in the RZ mode provides improvements in linear density as well as in the amplitude and waveform of the output signal. In terms of the write process, the RZ mode utilises write field reductions which permit the use of much simplified write head configurations. With regard to the medium, the RZ method opens up a new approach to the design of recording media. Improvements in recording density do not have to rely on further increases of coercivity, but instead, are sought through a judicious choice of media characteristics.

## Claims

1. Apparatus for vertical magnetic recording in a magnetisable recording medium comprising

a magnetic transducer (14) having means (12) for generating a magnetic field and a recording gap,

means for positioning said magnetic transducer so that said recording gap is in close proximity to a magnetic recording medium,

means for producing relative motion between said magnetic transducer and a recording medium, and

means (10) for repeatedly energising said magnetic field generating means so as to generate a magnetic field repeatedly and produce a series of magnetic transitions in the portions of a recording medium which are positioned successively adjacent to said gap,

characterised in that

said means for energising said magnetic field generating means provides unidirectional energising pulses of relatively short duration so that said magnetic field is a bipolar magnetic field and said magnetic transitions are also bipolar, resulting in RZ recording in said recording medium.

2. Apparatus as claimed in Claim 1 characterised in that successive unidirectional energising pulses have the same polarity.

3. Apparatus as claimed in Claim 1 characterised in that successive unidirectional energising pulses have the opposite polarity.

4. Apparatus as claimed in any one of the preceding claims characterised in that the duration of each unidirectional energising pulse is not substantially greater than the width of the recording gap of said magnetic transducer divided by the relative velocity of said magnetic transducer and said recording medium.

5. A method of vertical magnetic recording in a magnetisable recording medium comprising

positioning a magnetic transducer having means for generating a magnetic field and a recording gap, so that said recording gap is in close proximity to a magnetisable recording medium,

producing relative motion between said magnetic transducer and said recording medium, and

repeatedly energising said magnetic field generating means so as to generate a magnetic field repeatedly and produce a series of magnetic transitions in the portions of a recording medium which are positioned successively adjacent to said gap,

characterised in that

said magnetic field generating means is energised with unidirectional energising pulses of relatively short duration so that said magnetic field is a bipolar magnetic field and said magnetic transitions are also bipolar, resulting in RZ recording in said recording medium.

6. A method as claimed in Claim 5 characterised in that said successive unidirectional energising pulses have the same polarity.

7. A method as claimed in Claim 5 characterised in that successive unidirectional energising pulses have the opposite polarity.

8. A method as claimed in any one of Claims 5, 6 or 7 characterised in that the duration of each unidirectional energising pulse is not substantially greater than the width of the recording gap of said magnetic transducer divided by the relative velocity of said magnetic transducer and said recording medium.

FIG. 1

FIG. 2

FIG. 3

FIG. 4

FIG. 5

FIG. 6

0 214 567

| | NRZ HORIZONTAL | NRZ VERTICAL | RZ VERTICAL |
|---|---|---|---|
| WRITE CURRENT | | | |
| POLE TIPS MEDIUM | | | |
| WRITE FIELD | | | |
| MAGNETIC RESPONSE | | | |
| RECORDED TRANSITION | | | |

FIG. 7

$T_V$     $(T_V)$     $T_V$

$T_V$     $(T_H)$     $T_V$

FIG. 8

0 214 567

FIG. 10